# EUROPEAN PATENT SPECIFICATION

(11) **EP 3 703 086 B1**
(45) Date of publication and mention of the grant of the patent: **15.02.2023**
(21) Application number: 19160069.1
(22) Date of filing: 28.02.2019
(51) Int. Cl.: H01F 41/02, B22F 3/105

(54) **PRODUCTION METHOD OF SELF-MAGNETISED NET-SHAPE PERMANENT MAGNETS BY ADDITIVE MANUFACTURING**
VERFAHREN ZUR HERSTELLUNG VON SELBSTMAGNETISIERTEN NETZFÖRMIGEN PERMANENTMAGNETEN DURCH GENERATIVE FERTIGUNG
PROCÉDÉ DE PRODUCTION D'AIMANTS PERMANENTS AUTO-MAGNÉTISÉS DE FORME NETTE PAR FABRICATION ADDITIVE

(43) Date of publication of application: 02.09.2020
(73) Proprietor: ABB Schweiz AG, 5400 Baden (CH)
(72) Inventor: Jacimovic, Jacim, 5430 Wettingen (CH); Christen, Thomas, 5413 Birmenstorf (CH); Scherf, Lavinia, 2300 Kopenhagen (DK); Kessler, Reto, 5506 Mägenwil (CH); Herrmann, Lorenz, 5300 Turgi (CH); Denervaud, Eric, 1725 Posieux (CH)
(74) Representative: Zimmermann & Partner Patentanwälte mbB

(56) References cited:
- CN-B- 104 269 265
- GB-A- 2 521 191
- US-A1- 2018 117 818
- US-A1- 2018 229 442
- US-A1- 2019 006 098
- JACIM JACIMOVIC ET AL: "Net Shape 3D Printed NdFeB Permanent Magnet? : Net Shape 3D Printed NdFeB Permanent Magnet", ADVANCED ENGINEERING MATERIALS., vol. 19, no. 8, 1 August 2017 (2017-08-01) , page 1700098, XP055491039, DE ISSN: 1438-1656, DOI: 10.1002/adem.201700098

## Description

### Field of the Invention

Embodiments hereof relate to methods of producing permanent magnets.

### Background of the Invention

Magnetic materials are usually divided into permanent magnets (also referred to as hard magnets) and soft magnets. Hard magnets typically have coercivity values Hc>10 kA/m, whereas for soft magnets typically the coercivity is Hc<1 kA/m. Permanent magnets are commonly used in electrical machines (motors, generators). The most advanced permanent magnets today are based on rare earth (RE) metals, wherein rare earth metals are one of the elements of the Lanthanide series. Sintered, rare earth-based permanent magnets materials exhibit the highest magnetic performance, i.e. the highest coercivity Hc and the highest remanence Br.

State of the art anisotropic permanent magnets are commonly produced by the following sequence of steps:
i) Depositing a powder in a mold;
ii) Orienting the powder (i.e. the magnetic crystal anisotropy) by applying an external magnetic field;
iii) Pressing the powder to form a green body, usually by applying either uniaxial or isostatic pressure;
iv) Sintering the green body;
v) Transporting the sintered green body, wherein the sintered green body is a non-magnetised magnet;
vi) Magnetising the non-magnetized magnet to obtain a permanent magnet.

The state of the art methods have two major disadvantages. First, during production, the green body / magnet needs to be magnetised twice in order to achieve a maximum magnetic performance, which is required for many applications, such as in electrical devices. By applying a high magnetic field in steps ii) and vi) the particles of the green body / magnet can be oriented, which usually increases the magnetic performance compared to non-oriented particles, in particular by (partial) alignment of the magnetic easy axes of the microcrystallites in the direction of the applied field. Yet, around 10 % of particles remain non-oriented. Secondly, the production of permanent magnets is limited to the manufacture of very simple geometries, because the shaping is based on simple uniaxial die-pressing, isostatic pressing, or hot deformation in a uniaxial die-pressing step. Already very simple geometrical features, such as a slightly curved surface instead of a flat surface, comes with a significantly higher price of the magnet, because expensive additional machining steps have to be carried out.

In each magnetisation step the following problems appear:
In step ii) of the production method, the (magnetic) powder needs firstly to be oriented by magnetisation and pressed. Pressing can be done either at the same time, or after orientation. Independently of the type of process to realise this, up to 5 % of the magnetic orientation is lost.

After step iv) (sintering) the macroscopically non-magnetised magnet needs to be magnetised by applying an external magnetic field. This additional process step gives rise to higher costs of the permanent magnet, as this requires a special treatment, for example with a capacitive discharge magnetiser and/or depending on the desired magnetisation pattern (axial, parallel, radial, multi-polar etc.), special fixtures may be required.

In addition, magnets cannot be transported in a magnetised state, because of the attraction of metal dust or other consequences due to the presence of a magnetic field.

GB 2521191 A discloses magnetic materials and methods for their manufacture. CN 104269265 B discloses a permanent magnet and a preparation method thereof. US 2018/0117818 A1 discloses magnetic feed material and its use in producing bonded permanent magnets by additive manufacturing. US 2019/006098 A1 discloses near net shape manufacturing of magnets. US 2018/229442 A1 discloses bonded permanent magnets produced by additive manufacturing. Jacim Jacimovic et al: "Net Shape 3D Printed NdFeB Permanent Magnet?", Advanced Engineering Materials, vol. 19, no. 8, 1 August 2017 (2017-08-01), (ISSN: 1438-1 656, DOI: 10.1002/adem.201700098) discloses permanent magnets.

### Brief Summary of the Invention

Briefly, a method of producing a permanent magnet, a permanent magnet and an electrical machine are provided to overcome at least some of the abovementioned limitations. This object is accomplished by means of a method according to claim 1.

According to an embodiment a method of producing a permanent magnet comprises: A) Forming a magnetisable workpiece by additive manufacturing. The additive manufacturing comprising the following sequence of steps: i) Forming a first powder layer by depositing a first powder. The first powder being ferromagnetic. ii) Forming a first workpiece layer of the magnetisable workpiece by irradiating a predetermined first area of the first powder layer by means of a focused energy beam to fuse the first powder in the first area. iii) Repeating the sequence of steps i) and ii) multiple times to form further workpiece layers of the magnetisable workpiece. Further, the method of producing a permanent magnet comprises B) Forming the permanent magnet by partitioning the magnetisable workpiece. An exposed surface of the permanent magnet is formed by the partitioning, which is non-parallel to the first workpiece layer. Further, the permanent magnet produces an external magnetic field having a magnetic field strength of at least 1 kA/m.

An example of a permanent magnet is provided. The permanent magnet is obtained by a method according to any of the embodiments of the present disclosure. The permanent magnet comprises at least two magnetic poles. Optionally the permanent magnet comprises at least four magnetic poles. Preferably the permanent magnet is a Halbach array permanent magnet.

According to an example an electrical machine is provided. The electrical machine comprises at least one permanent magnet obtained by a method according to any of the embodiments of the present disclosure.

Those skilled in the art will recognise additional features and advantages being within the scope of the appended claims upon reading the following detailed description, and upon viewing the accompanying drawings.

### Brief Description of the Drawings

The components in the Figures are not necessarily to scale, instead emphasis being placed upon illustrating the principles of the invention. Moreover, in the Figures, like reference signs designate corresponding parts. In the drawings:
Figure 1A is a top view of a magnetisable workpiece produced according to an embodiment of the present disclosure.
Figure 1B displays a top view of a magnetisable workpiece produced according to an embodiment of the present disclosure.
Figure 1C displays a top view of a permanent magnet produced according to an embodiment of the present disclosure.
Figure 1D displays a top view of a magnetisable workpiece produced according to an embodiment of the present disclosure.
Figure 1E displays a top view of a permanent magnet produced according to an embodiment of the present disclosure.
Figure 2A displays a top view of a magnetisable workpiece produced according to an embodiment of the present disclosure.
Figure 2B displays a top view of a magnetisable workpiece produced according to an embodiment of the present disclosure.
Figure 3 displays a top view of a magnetisable workpiece produced according to an embodiment of the present disclosure.
Figure 4 displays a top view of a magnetisable workpiece produced according to an embodiment of the present disclosure.
Figure 5A displays a measured magnetic stray field distribution of a permanent magnet produced according to an embodiment of the present disclosure.
Figure 5B displays a measured magnetic stray field distribution of a permanent magnet produced according to an embodiment of the present disclosure.
Figure 6 displays a measured magnetic stray field distribution of a permanent magnet produced according to an embodiment of the present disclosure.

### Detailed Description of the Invention

In the following detailed description, reference is made to the accompanying drawings, which form a part hereof, and in which are shown by way of illustration specific embodiments of the invention.

As used herein, the terms "having", "containing", "including", "comprising" and the like are open ended terms that indicate the presence of stated elements or features, but do not preclude additional elements or features.

It is to be understood that other embodiments may be utilised and structural or logical changes may be made without departing from the scope of the present invention. The following detailed description, therefore, is not to be taken in a limiting sense, and the scope of the present invention is defined by the appended claims. The embodiments described herein use specific language, which should not be construed as limiting the scope of the appended claims.

According to an embodiment a method of producing a permanent magnet 200 is disclosed. The method comprises two steps: A) Forming a magnetisable workpiece 100 by additive manufacturing; B) Forming the permanent magnet 200 by partitioning the magnetisable workpiece 100.

Additive manufacturing of workpieces is known as such to the skilled person. For example, additive manufacturing is disclosed in US 2017/154713 A1, which is incorporated by reference herein in its entirety.

The magnetisable workpiece 100 may be formed of a plurality of workpiece layers. The first workpiece layer may be formed by carrying out at least two steps. First, in step i) a first powder layer may be formed by depositing a first powder. The first powder may be deposited by a powder delivery system, in particular including a powder delivery piston and a roller (e.g. based on selective laser melting). In another embodiment, the first powder may be deposited by means of a nozzle (e.g. based on laser metal deposition).

The first powder may be ferromagnetic. The first powder layer may have any free-form shape and/or size, preferably, the first powder layer is a closed area such as a circle, a square or a rectangle. The material of the first powder may comprise one of the following compositions a) to k), wherein composition
a) contains RE, Iron and Boron;
b) contains Aluminium, Nickel and Cobalt;
c) contains Samarium and Cobalt;
d) contains Samarium and Iron;
e) contains Samarium, Iron and Nitrogen;
f) contains Iron and Nitrogen;
g) contains Manganese, Aluminum and Carbon;
h) contains Manganese, Tin and Cobalt;
i) contains Manganese and Bismuth;
j) contains hard ferrite; and
k) contains RE and Iron and Carbon.
RE is a rare earth element of the Lanthanide series. In a preferred embodiment, the first powder may comprise a composition containing Neodymium, Iron and Boron.

In step ii) a first workpiece layer of the magnetisable workpiece 100 may be formed by irradiating a predetermined first area 101 of the first powder layer by means of a focused energy beam to fuse the first powder in the first area 101. In other words, the first area 101 may be a portion of the first powder layer such that the first powder is only fused within a predetermined area, i.e. the first area 101, whereas in the remaining area, i.e. within the first powder layer but outside the first area 101, the first powder may not be fused. The location and/or size and/or shape of the first area 101 and thus of the first workpiece layer may be freely predeterminable, for example based on CAD design data and directing the focused energy beam to a predetermined location, and along a predetermined path.

According to an embodiment, the focused energy beam may be a laser beam or an electron beam. In case the focused energy beam is a laser beam, step Aii), and preferably also step Ai) or even the entire step A), may be conducted under a protective, inert gas atmosphere (such as for example Argon). For example, the laser beam may be generated by a pulsed Nd:YAG laser. In case the focused energy beam is an electron beam, the step Aii), and preferably also step Ai) or even the entire step A), may be conducted under vacuum.

In a step Aiii), the sequence of steps Ai) and Aii) may be repeated multiples times to form further (second, third, ..., nth) workpiece layers of the magnetisable workpiece 100 on top of the first workpiece layer. Further powder layers (second, third, ..., nth) may be formed by depositing further powders (second, third, ..., nth). In a preferred embodiment, further powder layers may be formed by depositing the first powder. In other words, the first powder and the powder used for further layers may be the same. As described above, the first powder layer and thus also any further powder layer may have any free-form shape and/or size. Typically, the first powder layer and all further powder layers have the same location, shape and size. The location and/or size and/or shape of the further areas (second, third, ..., nth) and thus of the first workpiece layer may be freely predeterminable. In some embodiments, for example if the magnetisable workpiece 100 has the shape of cuboid, the location and/or size and/or shape of the further areas may be identical. In other embodiments, for example if the magnetisable workpiece 100 is of a curved or inclined shape, the location and/or size and/or shape of the further areas may not be identical. In any case, a workpiece layer may at least partially overlap in top view with the workpiece layer underneath, such that an upper workpiece layer may be bonded locally to an underlying and adjacent workpiece layer at least partially, by fusing the powder in the respective areas.

Parallel to the first workpiece layer the largest dimension of the magnetisable workpiece 100 may be at least 1 mm, preferably at least 1 cm. Perpendicular to the first workpiece layer, i.e. in the building direction of the magnetisable workpiece 100, the largest dimension of the magnetisable workpiece 100 may be at least 1 mm, preferably at least 1 cm. The magnetisable workpiece 100 may be formed of at least 100 workpiece layers, in some embodiments of at least 1000 workpiece layers.

Fusing of the first powder by means of a focused energy beam may correspond to sintering of the first powder, or even melting of the first powder. By fusing the first powder in the first or further areas, i.e. in steps Aii) and/or Aiii), magnetic grains may be formed in the magnetisable workpiece 100. By fusing the first powder in the first or further areas, i.e. in steps Aii) and/or Aiii), pole-avoiding magnetic domains, also referred to as magnetic closure domains, may be formed in the magnetisable workpiece 100. The first workpiece layer may be magnetised preferably in-plane, in particular due to the first workpiece layer comprising large or macroscopic magnetic closure domains, which may lead to a marginal or vanishing external magnetic field (i.e. stray field). An internal magnetisation pattern may occur in combination with a corresponding anisotropy pattern. A vanishing or marginal external magnetic field (stray field) is advantageous, or possibly even necessary, as the presence of an out-of-plane magnetic field may hamper the formation of a second (further) powder layer. In particular, the magnetic lines may remain in the plane of the first workpiece layer (parallel to the first workpiece layer) and thus do not perturb the second powder that is formed by depositing the first or second powder. Although not wishing to be bound to a particular theory, it is believed that the large or macroscopic magnetic closure domains may be obtained by the rapid fusing and solidification, and/or an in-plane magnetisation of the first workpiece layer may be fixed during cooling down of the first workpiece layer.

Step Aiii) of the method of producing a permanent magnet 200 may lead to vanishing or marginal external magnetic fields for most or even all further workpiece layers. The resulting magnetisable workpiece 100 may be substantially nonmagnetic. According to an embodiment, the magnetisable workpiece 100 may produce an external magnetic field having a magnetic field strength of less than 0.1 kA/m. Experimental methods to measure the magnetic field strength are known to the skilled person. For example, a pulsed field magnetometer may be employed.

Further, the method of producing a permanent magnet 200 comprises step B):
B) Forming the permanent magnet 200 by partitioning the magnetisable workpiece 100.

Partitioning the magnetisable workpiece 100 may form the permanent magnet 200 with an exposed surface 150. The exposed surface 150 may be non-parallel to the first workpiece layer. Preferably, the exposed surface 150 is perpendicular to the first workpiece layer or approximately perpendicular to the first workpiece layer. Partitioning the magnetisable workpiece 100 may also form a plurality of permanent magnets 200. For example, partitioning the magnetisable workpiece 100 along a plane perpendicular to the first workpiece layer may result in two permanent magnets 200. In one embodiment, partitioning the magnetisable workpiece 100 along multiple planes non-parallel, preferably perpendicular, to the first workpiece layer may lead to more than two permanent magnets 200. Partitioning the magnetisable workpiece 100 may lead to magnetic poles or residual magnetic poles resulting from the exposed surface 150. The permanent magnet 200 formed by partitioning the magnetisable workpiece 100 may produce a substantial external magnetic field. The permanent magnet 200 may produce an external magnetic field having a magnetic field strength of at least 1 kA/m, preferably of at least 10 kA/m, and more preferably of at least 100 kA/m.

According to an embodiment, the partitioning may be carried out by a method selected from the group consisting of cutting; breaking the magnetisable workpiece 100 parallel to a plurality of predetermined breaking points; sawing; grinding an external surface of the magnetisable workpiece 100, wherein the external surface 150 is parallel to the exposed surface; jet cladding. The external surface may be non-parallel to the first workpiece layer.

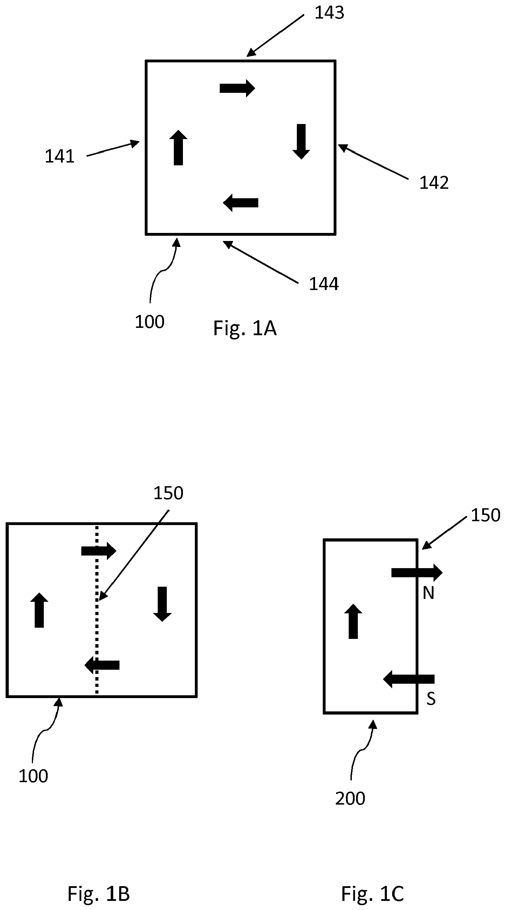

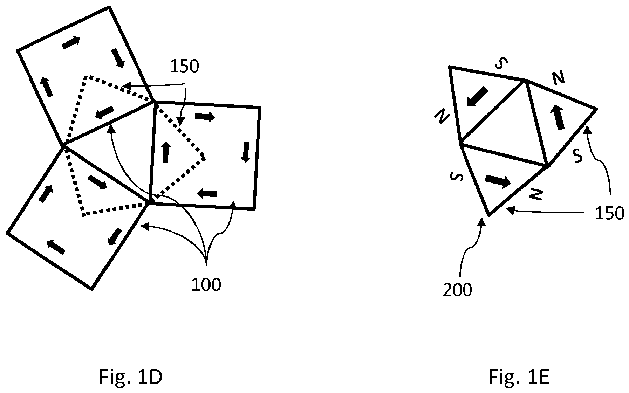

Figure 1 further illustrates a magnetisable workpieces 100 and permanent magnets 200 obtainable by embodiments of the present disclosure.

Figure 1A is a top view of a magnetisable workpiece 100, therefore the top most workpiece layer is visible. For the sake of illustration, this may be the first or any other workpiece layer (as is also the case for the following figures 1B to 1E). Magnetisable workpiece 100 may comprise a plurality of magnetic closure domains 141, 142, 143, 144. The bold arrows in Figure 1A and in all following figures represent the course of the magnetic field lines. The magnetic field lines may be parallel to the workpiece layers and/or may be oriented in various directions. The workpiece layers may be magnetised preferably in-plane, which may lead to a marginal or vanishing external magnetic field. The magnetisable workpiece 100 may be partitioned, preferably cut along a plane, which is non-parallel to the first workpiece layer. Preferably, as illustrated in Figure 1B by the bold dotted line, the magnetisable workpiece 100 may be cut perpendicular to the first workpiece layer, resulting in an exposed surface 150. After cutting, the permanent magnet 200 may be obtained as shown in Figure 1C. The permanent magnet 200 may comprise a plurality of magnetic poles resulting from the exposed surface 150.

Figure 1D displays an example of a magnetisable workpiece 100 with a complex geometrical shape and complex arrangement of magnetic closure domains. The permanent magnet 200 may be produced by cutting the magnetisable workpiece 100 along a plurality of planes perpendicular to the workpiece layers, as illustrated by the bold dotted lines. The resulting permanent magnet 200 (Figure 1E) also may have a more complex geometrical shape and/or comprise a plurality of magnetic poles resulting from the exposed surface 150. As illustrated in Figures 1D and 1E, complex geometrical shapes and magnetisation patterns may be obtained by the methods of the present disclosure, for example based on CAD design data and appropriate partitioning, without additional labour or production steps.

The magnetic grains may be elongated and/or tubular shaped and/or may resemble needles. The orientation of the magnetic grains may be such that the magnetic grains appear as elongated and/or tubular when viewed from the exposed surface 150 and may appear circular when viewed parallel to the first workpiece layer. In other words, an axial dimension of the magnetic grains may be parallel to the exposed surface 150, whereas a radial dimension may be parallel to the first workpiece dimension. The magnetic grains may have an average size in the plane defined by the exposed surface 150 of at least 0.5 µm, preferably of at least 1 µm.

Step B) is carried out after step A). Step B) may be carried out immediately after step A). Step B) may also be carried out substantially later. For example, step B) may also be carried out 1 hour or 1 day or even 1 month after step A). Advantageously, this allows for handling and transport of the magnetisable workpiece 100 to a desired location, and subsequently carrying out step B) at the desired location to form the permanent magnet 200. The resulting magnetisable workpiece 100 may be substantially nonmagnetic, therefore the attraction of metal dust or other consequences that may occur due to the presence of a magnetic field may be alleviated or even fully eliminated. Advantageously, the remaining workpieces other than the permanent magnet 200 that are formed due to partitioning of the magnetisable workpiece 100, may be handled and transported together with the permanent magnet 200, i.e. step B) may be carried out, but the remaining workpieces may not be removed from the permanent magnet 200. Therefore, during handling and transport of the permanent magnet 200, the attraction of metal dust or other consequences that may occur due to the presence of a magnetic field may be alleviated or even fully eliminated.

Surprisingly, the inventors have identified a range of experimental parameters that, in connection with the method of producing a permanent magnet 200 according to embodiments of the present disclosure, result in a permanent magnet 200 which produces an external magnetic field having a substantial magnetic field strength. In particular, the inventors have observed this advantageous effect in case one or more, preferably all, of the experimental parameters selected from the group consisting of: a thickness of the first (and further) workpiece layer; a beam diameter of the laser beam at a point of impact; an irradiation time; a point distance; and a hatching distance are implemented in a preferred range, which will be disclosed in the following.

The thickness of the first workpiece layer and/or any further workpiece layer may be at least 10 µm, preferably at least 50 µm. The thickness of the first workpiece layer and/or any further workpiece layers may be no larger than 150 µm, preferably no larger than 100 µm.

The term "point of impact" refers to a portion of the first (or further) powder layer, which is irradiated by the focused energy beam. In particular, the location of the point of impact corresponds to a centroid of the focused energy beam.

The term "beam diameter" refers to the diameter of the laser beam at the point of impact, and therefore not necessarily in a focal point of the laser beam in case it is focused. The beam diameter of the laser beam may refer to the 1/e² width assuming a Gaussian beam profile. At a point of impact of the laser beam with the first powder layer, the laser beam may have a beam diameter of less than 150 µm, preferably of less than 30 µm.

According to an embodiment, at the point of impact of the laser beam with the first powder layer, the first powder layer may be irradiated for at least 20 µs, preferably at least 100 µs, and/or no longer than 500 µs, preferably no longer than 300 µs. A power output of the laser may be at least 10 W, preferably at least 40 W, and/or no greater than 300 W, preferably no greater than 120 W.

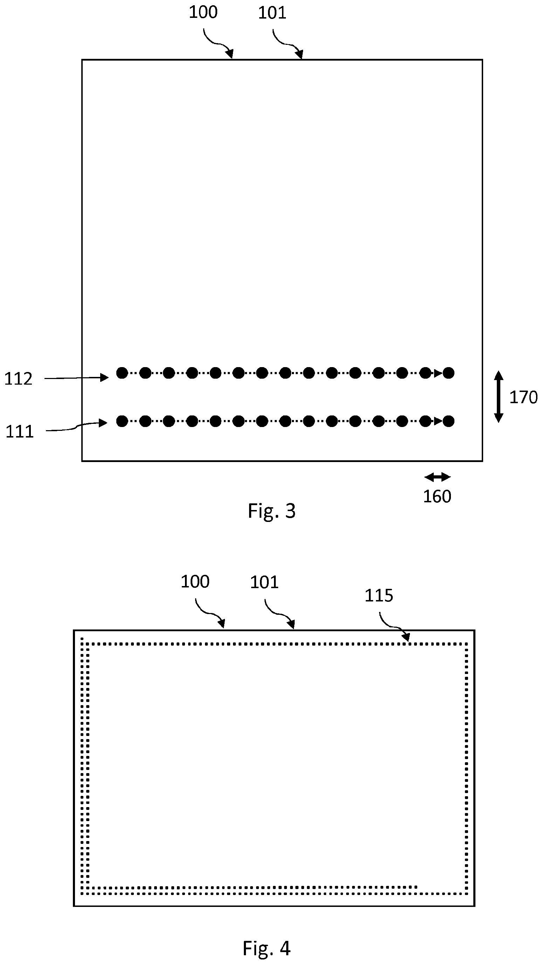

The first workpiece layer may be formed by irradiating the first area 101 of the first powder at a plurality of points of impact. Irradiating the first area 101 may be carried out by directing the focused energy beam over a plurality of printing trajectories 111. Each printing trajectory 111 may comprise a plurality of points of impact. Stated differently, the first area 101 may be viewed as being subdivided into a plurality of printing trajectories 111, and the printing trajectories 111 may be viewed as being subdivided into a plurality of points of impact. Figure 3 illustrates the first area 101 of the magnetisable workpiece 100. Two printing trajectories 111, 112 are displayed comprising a plurality of points of impact. The dotted line with the arrow illustrates the order in which the first area is irradiated.

The term "point distance" 160 refers to the mean distance between adjacent points of impact of one printing trajectory. Figure 3 illustrates the point distance 160. According to an embodiment a point distance may be at least 10 µm, preferably at least 30 µm, and/or no larger than 150 µm, preferably no larger than 80 µm.

The term "hatching distance" 170 refers to the mean distance between adjacent printing trajectories. Figure 3 illustrates the hatching distance 170. According to an embodiment a hatching distance may be at least 50 µm, preferably at least 100 µm, and/or no larger than 300 µm, preferably no larger than 150 µm.

Surprisingly, the inventors have identified beneficial modes of operation of irradiating the first area and/or further areas (steps Aii) and Aiii)) that, in connection with the method of producing a permanent magnet 200 according to embodiments of the present disclosure, result in a permanent magnet 200 which produces an external magnetic field having a substantial magnetic field strength. These embodiments are based on configuring the printing trajectories as such and the sequence of printing trajectories in a certain way, as will be explained in the following.

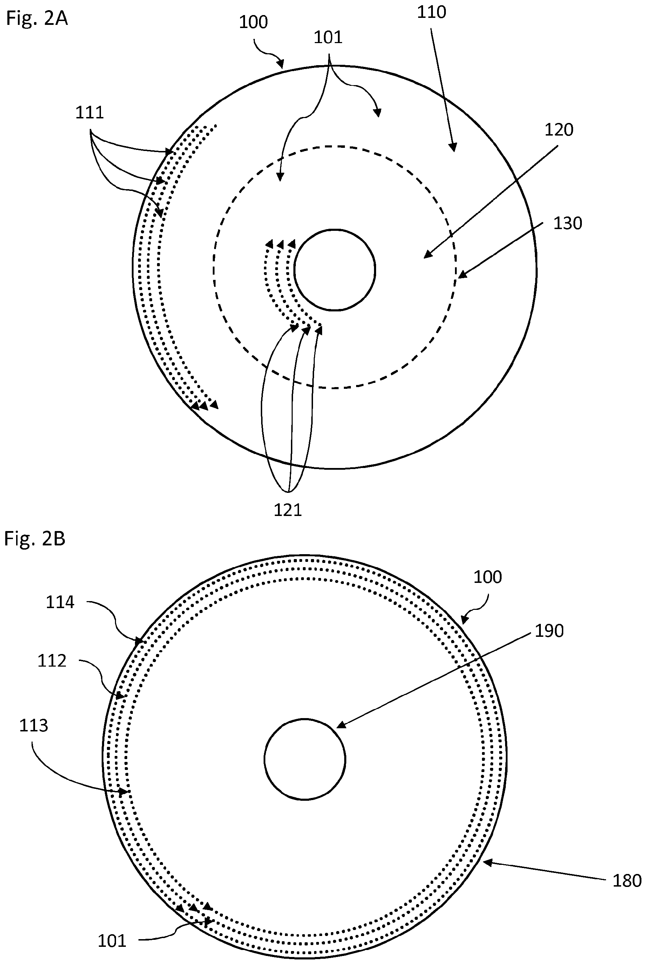

According to an embodiment, step Aii) may comprise directing the focused energy beam along a plurality of printing trajectories 111. Preferably the focused energy beam is a laser beam. In an embodiment, each printing trajectory 111 may be one of a closed trajectory and a spiral-shaped trajectory. An example of a closed trajectory 114 is illustrated in Figure 2B. An example of spiral-shaped trajectory 115 is illustrated in Figure 4. Optionally, each printing trajectory 111 may be substantially circularly shaped.

Step Aiii) may comprise directing the focused energy beam along a plurality of printing trajectories. Preferably the focused energy beam is a laser beam. According to one embodiment, at least one printing trajectory of a second workpiece layer may be substantially perpendicular to at least one of the printing trajectories of the first workpiece layer. Preferably, a plurality or even all of the printing trajectories of the second workpiece layer may be substantially perpendicular to a plurality or even all of the printing trajectories of the first workpiece layer. The printing trajectories of the first workpiece layer and of the second workpiece layer may be a line. A plurality or even all of printing trajectories of the third workpiece layer may be perpendicular to a plurality or even all of the printing trajectories of the second workpiece layer and so forth, such that the printing trajectories of workpiece layers may be perpendicular to the printing trajectories of adjacent workpiece layers.

The first area 101 layer may comprise a first end 180 and a second end 190. For illustration purposes, the first end 180 and the second 190 are shown in Figure 2B. Irradiation of the first area 101 may be carried by means of a first point of impact adjacent to the first end 180. For a second point of impact on the first area 101, a distance between the second point of impact and the second end 190 may be substantially equal to or less than a distance between the first point of impact and the second end 190. Preferably, for all subsequent points of impact on the first workpiece layer a distance between the points of impact and the second end may be substantially equal or gradually decrease. For example, as illustrated in Fig. 2B, all points of impact of a first printing trajectory 114 may be equally spaced with respect to the second end 190. For the first point of impact of a second printing trajectory 112 the distance to the second end 190 may be less than for the points of impact of the first printing trajectory 114.

According to an embodiment, the first workpiece layer may comprise a first section 110, wherein the first section 110 comprises one or more printing trajectories 111. One or more printing trajectories 111 of the first section 110 may define a first printing direction that is one of clockwise and counter-clockwise. For example, Figure 2A shows the first section 110 comprising printing trajectories 111 that define a counter-clockwise printing direction. The first workpiece layer may also comprise a second section 120, wherein the second section 120 comprises one or more printing trajectories 121. The one or more printing trajectories 121 of the second section 120 may define a second printing direction that is opposite to the first printing direction. For example, Figure 2A shows the second section 120 comprising printing trajectories 121 that define a clockwise printing direction. A printing direction of the first section 110 may be adjacent to a printing trajectory of the second section 120 at a virtual line 130.

In an embodiment, step A) may be carried out without applying a magnetic field. Advantageously, substantial magnetic properties may be obtained for the permanent magnet 200 without the need for applying an external magnetic field while forming the magnetisable workpiece 100. According to another embodiment, no external magnetic field may be applied at least until completion of step B), preferably no magnetic external field may be applied in the entire method of producing a permanent magnet 200. Advantageously, substantial magnetic properties may be obtained for the permanent magnet 200 without the need for applying an external magnetic in the production process of the permanent magnet 200. In a further embodiment, the magnetic properties of the permanent magnet 200, in particular the external magnetic field produced by the permanent magnet 200, may be increased by carrying out a step C): Exposing the permanent magnet 200 to an external magnetic field. In particular, it may be advantageous to carry out step C) after step B).

Advantageously, methods according to embodiments of the present disclosure allow for manufacturing permanent magnets comprising two production steps, whereas prior art methods require six production steps. In particular, the two magnetisation steps necessary in prior art methods may be omitted. In addition, embodiments of the present disclosure allow for manufacturing complex geometrical shapes without additional labour or production steps. In particular, the productions methods disclosed herein enable printing of near net shape permanent magnets or even net shape permanent magnets, such that the need for surface finishing or the like may be reduced or even no longer exists. Embodiments of the present disclosure allow for the production of magnets with complex, and in particular predeterminable, magnetisation patters without the need for exposing the permanent magnet 200 to an external magnetic field. Complex magnetisation patterns are either not feasible or very expensive to produce with prior art methods.

According to an example a permanent magnet is provided. The permanent magnet may be obtained by a method according to any of the embodiments of the present disclosure. The permanent magnet may comprise least two magnetic poles. Optionally the permanent magnet may comprise at least four magnetic poles. Preferably the permanent magnet is a Halbach array permanent magnet.

The permanent magnets 200 obtained by a method according to any of the embodiments of the present disclosure may be used for a sensor and/or an electrical machine, preferably wherein the electrical machine comprises at least one of an electric motor, a generator, a power transformer, an instrument transformer, a linear motion device and a magnetically biased inductor, and a magnetic actuator.

According to an example an electrical machine is provided. The electrical machine may comprise at least one permanent magnet obtained by a method according to any of the embodiments of the present disclosure. The electrical machine may be a stepper motor. The electrical machine may comprise at least one of an electric motor, a generator, a power transformer, an instrument transformer, a linear motion device and a magnetically biased inductor, and a magnetic actuator.

According to an example a sensor is provided. The sensor may comprise at least one permanent magnet obtained by a method according to any of the embodiments of the present disclosure.

### EXAMPLES

The following are non-limiting examples of permanent magnets produced according to methods of the present invention. The examples are given solely for the purpose of illustration and are not to be construed as limitations of the present invention, as many variations thereof are possible without departing from the scope of the invention, which would be recognised by one of ordinary skill in the art.

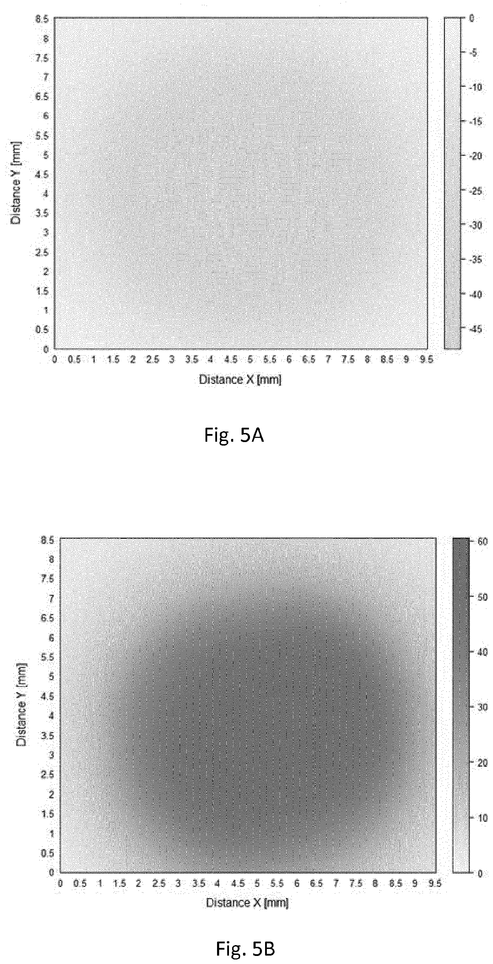

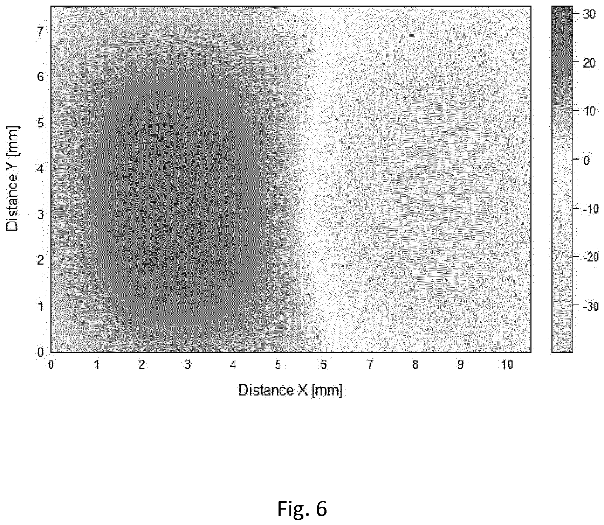

Example 1: A magnetisable workpiece was produced, wherein the magnetisable workpiece resembles the form of a torus. The following experimental parameters were employed. The laser beam has a beam diameter (at a point of impact with the first powder layer) of approximately 40 µm. The first (and the further) powder layers were irradiated for approximately 120 µs. The thickness of the first (and of the further) workpiece layers was approximately 40 µm. The output power of the laser was about 115 W. The point distance was about 40 µm and the hatching distance was approximately 100 µm. The magnetisable workpiece was then cut perpendicular to the first workpiece layer to form the permanent magnet. The magnetic stray field distribution was measured in the air, 1 mm above and parallel to the exposed surface of the permanent magnet. The measurements were carried out by employing a pulsed field magnetometer. The magnetic stray field distribution of the exposed surface of the permanent magnet is shown in Figure 5A. The magnetic stray field distribution is given in units of mT in Figures 5A, 5B and 6. The magnetic stray field distribution of the second exposed surface of the permanent magnet is shown in Figure 5B.

Example 2: A magnetisable workpiece was produced, wherein the magnetisable workpiece resembles the form of a cube. The following experimental parameters were employed. The laser beam has a beam diameter (at a point of impact with the first powder layer) of approximately 40 µm. The first (and the further) powder layers were irradiated for approximately 120 µs. The thickness of the first (and of the further) workpiece layers was approximately 40 µm. The output power of the laser was around 115 W. The point distance was about 40 µm and the hatching distance was approximately 100 µm. The magnetisable workpiece was then cut perpendicular to the first workpiece layer to form the permanent magnet. The magnetic stray field distribution was measured in the air, 1 mm above and parallel to the exposed surface of the permanent magnet. The measurements were carried out by employing a pulsed field magnetometer. The magnetic stray field distribution of the exposed surface of the permanent magnet is shown in Figure 6.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "100 µm" is intended to mean "about 100 µm".

## Claims

1. A method of producing a permanent magnet, comprising:
A) Forming a magnetisable workpiece by additive manufacturing, the additive manufacturing comprising the following sequence of steps:
i) Forming a first powder layer by depositing a first powder, the first powder being ferromagnetic;
ii) Forming a first workpiece layer of the magnetisable workpiece by irradiating a predetermined first area of the first powder layer by means of a focused energy beam to fuse the first powder in the first area;
iii) Repeating the sequence of steps i) and ii) multiple times to form further workpiece layers of the magnetisable workpiece; **characterised by**
B) Forming the permanent magnet by partitioning the magnetisable workpiece,
wherein an exposed surface of the permanent magnet formed by the partitioning is non-parallel to the first workpiece layer; and
wherein the permanent magnet produces an external magnetic field having a magnetic field strength of at least 1 kA/m.

2. The method according to claim 1, wherein the partitioning is carried out by a method selected from the group consisting of cutting; breaking the magnetisable workpiece parallel to a plurality of predetermined breaking points; sawing; grinding an external surface of the magnetisable workpiece, wherein the external surface is parallel to the exposed surface; jet cladding.

3. The method according to any of the preceding claims, wherein the focused energy beam is a laser beam or an electron beam.

4. The method according to any of the preceding claims, wherein prior to the partitioning, the magnetisable workpiece produces an external magnetic field having a magnetic field strength of less than 0.1 kA/m; and optionally wherein the workpiece layers have an internal magnetization and/or a local anisotropy.

5. The method according to any of the preceding claims, wherein the material of the first powder comprises one of compositions a) to k), wherein composition
a) contains RE, Iron and Boron;
b) contains Aluminium, Nickel and Cobalt;
c) contains Samarium and Cobalt;
d) contains Samarium and Iron;
e) contains Samarium, Iron and Nitrogen;
f) contains Iron and Nitrogen;
g) contains Manganese, Aluminum and Carbon;
h) contains Manganese, Tin and Cobalt;
i) contains Manganese and Bismuth;
j) contains hard ferrite; and
k) contains RE and Iron and Carbon;
wherein RE is a rare earth element of the Lanthanide series; and
wherein preferably the composition contains Neodymium, Iron and Boron.

6. The method according to any of the preceding claims, wherein magnetic grains are formed in the magnetisable workpiece by steps Aii) and/or Aiii), and
wherein the magnetic grains have an average size in the plane defined by the exposed surface of at least 0.5 µm.

7. The method according to any of the preceding claims, wherein
a) the thickness of the first workpiece layer is at least 10 µm, preferably at least 50 µm, and/or no larger than 150 µm, preferably no larger than 100 µm; and/or wherein
b) at a point of impact of the laser beam with the first powder layer, the laser beam has a beam diameter of less than 150 µm, preferably less than 30 µm; and/or wherein
c) at the point of impact of the laser beam with the first powder layer, the first powder layer is irradiated for at least 20 µs, preferably at least 100 µs, and/or no longer than 500 µs, preferably no longer than 300 µs; and/or wherein
d) a power output of a laser is at least 10 W, preferably at least 40 W, and/or no greater than 300 W, preferably no greater than 120 W.

8. The method according to any of the preceding claims, wherein
a) a point distance is at least 10 µm, preferably at least 30 µm, and/or no larger than 150 µm, preferably no larger than 80 µm; and/or wherein
b) a hatching distance is at least 50 µm, preferably at least 100 µm, and/or no larger than 300 µm, preferably no larger than 150 µm.

9. The method according to any of the preceding claims, wherein step Aii) comprises directing the focused energy beam, preferably the laser beam, along a plurality of printing trajectories,
wherein each printing trajectory comprises a plurality of points of impact; and optionally wherein each printing trajectory is one of a closed trajectory and a spiral-shaped trajectory,
wherein preferably each printing trajectory is substantially circularly shaped.

10. The method according to claim 9, wherein step Aiii) comprises directing the focused energy beam, preferably the laser beam, along a plurality of printing trajectories, and
wherein at least one printing trajectory of a second workpiece layer is substantially perpendicular to at least one of the printing trajectories of the first workpiece layer.

11. The method according to claim 9 or 10, wherein the first area comprises a first and a second end, wherein a first point of impact on the first workpiece layer is adjacent to the first end, and
wherein for a second point of impact on the first workpiece layer a distance between the second point of impact and the second end is substantially equal to or less than a distance between the first point of impact and the second end, preferably
wherein for all subsequent points of impact on the first workpiece layer a distance between the points of impact and the second end is substantially equal or gradually decreases.

12. The method according to claim 9, wherein the first workpiece layer comprises a first section,
wherein the first section comprises one or more printing trajectories, and
wherein the one or more printing trajectories of the first section define a first printing direction that is one of clockwise and counter-clockwise.

## Patentansprüche

1. Herstellungsverfahren für einen Permanentmagneten, Folgendes umfassend:
A) Ausbilden eines magnetisierbaren Werkstücks durch Additivherstellung, wobei die Additivherstellung die folgende Sequenz von Schritten umfasst:
i) Ausbilden einer ersten Pulverschicht durch Ablagern eines ersten Pulvers, wobei das erste Pulver ferromagnetisch ist;
ii) Ausbilden einer ersten Werkstückschicht des magnetisierbaren Werkstücks durch Bestrahlen eines vorbestimmten ersten Bereichs der ersten Pulverschicht mittels eines Strahls fokussierter Energie, um das erste Pulver in dem ersten Bereich zu verschmelzen;
iii) mehrfaches Wiederholen der Sequenz der Schritte i) und ii), um weitere Werkstückschichten des magnetisierbaren Werkstücks auszubilden; **gekennzeichnet durch**
B) Ausbilden des Permanentmagneten durch Unterteilen des magnetisierbaren Werkstücks,
wobei eine freiliegende Oberfläche des Permanentmagneten, die durch das Unterteilen ausgebildet wird, zu der ersten Werkstückschicht nicht parallel ist; und
wobei der Permanentmagnet ein externes Magnetfeld mit einer Magnetfeldstärke von mindestens 1 kA/m erzeugt.

2. Verfahren nach Anspruch 1, wobei das Unterteilen durch ein Verfahren ausgeführt wird, das aus der Gruppe ausgewählt ist, bestehend aus Schneiden; Brechen des magnetisierbaren Werkstücks parallel zu mehreren vorbestimmten Bruchpunkten; Sägen; Schleifen einer externen Oberfläche des magnetisierbaren Werkstücks, wobei die äußere Oberfläche zu der freiliegenden Oberfläche parallel ist; Strahlplattieren.

3. Verfahren nach einem der vorhergehenden Ansprüche, wobei der Strahl fokussierter Energie ein Laserstrahl oder ein Elektronenstrahl ist.

4. Verfahren nach einem der vorhergehenden Ansprüche, wobei das magnetisierbare Werkstück vor dem Unterteilen ein externes Magnetfeld mit einer Magnetfeldstärke von weniger als 0,1 kA/m erzeugt; und wobei die Werkstückschichten gegebenenfalls eine interne Magnetisierung und/oder eine lokale Anisotropie aufweisen.

5. Verfahren nach einem der vorhergehenden Ansprüche, wobei das Material des ersten Pulvers eine der Zusammensetzungen a) bis k) enthält, wobei Zusammensetzung
a) RE, Eisen und Bor enthält;
b) Aluminium, Nickel und Kobalt enthält;
c) Samarium und Kobalt enthält;
d) Samarium und Eisen enthält;
e) Samarium, Eisen und Stickstoff enthält;
f) Eisen und Stickstoff enthält;
g) Mangan, Aluminium und Kohlenstoff enthält;
h) Mangan, Zinn und Kobalt enthält;
i) Mangan und Bismut enthält;
j) Hartferrit enthält; und
k) RE und Eisen und Kohlenstoff enthält;
wobei RE ein Seltenerdenelement der Lanthanide ist; und
wobei die Zusammensetzung vorzugsweise Neodym, Eisen und Bor enthält.

6. Verfahren nach einem der vorhergehenden Ansprüche, wobei in dem magnetisierbaren Werkstück durch Schritte Aii) und/oder Aiii) magnetische Körner ausgebildet werden und
wobei die magnetischen Körner eine durchschnittliche Größe in der Ebene, die durch die freiliegende Oberfläche definiert ist, von mindestens 0,5 µm aufweisen.

7. Verfahren nach einem der vorhergehenden Ansprüche, wobei
a) die Dicke der ersten Werkstückschicht mindestens 10 µm, vorzugsweise mindestens 50 µm, und/oder nicht größer als 150 µm, vorzugsweise nicht größer als 100 µm, ist; und/oder wobei
b) an einem Auftreffpunkt des Laserstrahls auf die erste Pulverschicht der Laserstrahl einen Strahldurchmesser von weniger als 150 µm, vorzugsweise von weniger als 30 µm, aufweist; und/oder wobei
c) an dem Auftreffpunkt des Laserstrahls auf die erste Pulverschicht die erste Pulverschicht für mindestens 20 µs, vorzugsweise für mindestens 100 µs, und/oder nicht länger als für 500 µs, vorzugsweise nicht länger als für 300 µs, bestrahlt wird; und/oder wobei
d) eine Leistungsabgabe eines Lasers mindestens 10 W, vorzugsweise mindestens 40 W, und/oder nicht größer als 300 W, vorzugsweise nicht größer als 120 W, ist.

8. Verfahren nach einem der vorhergehenden Ansprüche, wobei
a) eine Punktentfernung mindestens 10 µm, vorzugsweise mindestens 30 µm, und/oder nicht größer als 150 µm, vorzugsweise nicht größer als 80 µm ist; und/oder wobei
b) eine Bahnentfernung mindestens 50 µm, vorzugsweise mindestens 100 µm, und/oder nicht größer als 300 µm, vorzugsweise nicht größer als 150 µm ist.

9. Verfahren nach einem der vorhergehenden Ansprüche, wobei Schritt Aii) Richten des Strahls fokussierter Energie, vorzugsweise des Laserstrahls, entlang mehreren Druckbahnen umfasst,
wobei jede Druckbahn mehrere Auftreffpunkte umfasst; und wobei gegebenenfalls jede Druckbahn entweder eine geschlossene Bahn oder eine spiralförmige Bahn ist,
wobei vorzugsweise jede Druckbahn im Wesentlichen kreisförmig ist.

10. Verfahren nach Anspruch 9, wobei Schritt Aiii) Richten des Strahls fokussierter Energie, vorzugsweise des Laserstrahls, entlang mehreren Druckbahnen umfasst, und
wobei mindestens eine Druckbahn einer zweiten Werkstückschicht im Wesentlichen senkrecht zu mindestens einer der Druckbahnen der ersten Werkstückschicht ist.

11. Verfahren nach Anspruch 9 oder 10, wobei der erste Bereich ein erstes und ein zweites Ende umfasst, wobei ein erster Auftreffpunkt auf der ersten Werkstückschicht dem ersten Ende benachbart ist und
wobei für einen zweiten Auftreffpunkt auf der ersten Werkstückschicht eine Entfernung zwischen dem zweiten Auftreffpunkt und dem zweiten Ende im Wesentlichen kleiner oder gleich einer Entfernung zwischen dem ersten Auftreffpunkt und dem zweiten Ende ist,
wobei vorzugsweise für alle nachfolgenden Auftreffpunkte auf der ersten Werkstückschicht eine Entfernung zwischen den Auftreffpunkten und dem zweiten Ende im Wesentlichen gleich ist oder sich allmählich vermindert.

12. Verfahren nach Anspruch 9, wobei die erste Werkstückschicht einen ersten Abschnitt umfasst,
wobei der erste Abschnitt eine oder mehrere Druckbahnen umfasst und
wobei die eine oder die mehreren Druckbahnen des ersten Abschnitts eine erste Druckrichtung definieren, die entweder im Uhrzeigersinn und gegen den Uhrzeigersinn ist.

## Revendications

1. Procédé de production d'un aimant permanent, comprenant :
A) la formation d'une pièce magnétisable par fabrication additive, la fabrication additive comprenant la séquence suivante d'étapes :
i) la formation d'une première couche de poudre en déposant une première poudre, la première poudre étant ferromagnétique ;
ii) la formation d'une première couche de pièce de la pièce magnétisable en irradiant une première zone prédéterminée de la première couche de poudre au moyen d'un faisceau d'énergie focalisé pour faire fondre la première poudre dans la première zone ;
iii) la répétition de la séquence des étapes i) et ii) plusieurs fois pour former d'autres couches de pièce de la pièce magnétisable ; **caractérisé par**
B) la formation de l'aimant permanent par partitionnement de la pièce magnétisable,
une surface exposée de l'aimant permanent formé par le partitionnement étant non parallèle à la première couche de pièce ; et
l'aimant permanent produisant un champ magnétique externe ayant une intensité de champ magnétique d'au moins 1 kA/m.

2. Procédé selon la revendication 1, le partitionnement étant effectué par un procédé choisi dans le groupe constitué par le découpage ; la rupture de la pièce magnétisable parallèlement à une pluralité de points de rupture prédéterminés ; le sciage ; le meulage d'une surface externe de la pièce magnétisable, la surface externe étant parallèle à la surface exposée ; le placage par jet.

3. Procédé selon l'une quelconque des revendications précédentes, le faisceau d'énergie focalisé étant un faisceau laser ou un faisceau d'électrons.

4. Procédé selon l'une quelconque des revendications précédentes, avant le partitionnement, la pièce magnétisable produisant un champ magnétique externe ayant une intensité de champ magnétique inférieure à 0,1 kA/m ; et éventuellement les couches de la pièce ayant une magnétisation interne et/ou une anisotropie locale.

5. Procédé selon l'une quelconque des revendications précédentes, le matériau de la première poudre comprenant l'une des compositions a) à k), la composition
a) contenant du RE, du fer et du bore ;
b) contenant de l'aluminium, du nickel et du cobalt ;
c) contenant du samarium et du cobalt ;
d) contenant du samarium et du fer ;
e) contenant du samarium, du fer et de l'azote ;
f) contenant du fer et de l'azote ;
g) contenant du manganèse, de l'aluminium et du carbone ;
h) contenant du manganèse, de l'étain et du cobalt ;
i) contenant du manganèse et du bismuth ;
j) contenant de la ferrite dure ; et
k) contenant du RE, du fer et du carbone ;
RE étant un élément des terres rares de la série des lanthanides ; et
de préférence, la composition contenant du néodyme, du fer et du bore.

6. Procédé selon l'une quelconque des revendications précédentes, des grains magnétiques étant formés dans la pièce magnétisable par les étapes Aii) et/ou Aiii), et
les grains magnétiques ayant une taille moyenne dans le plan défini par la surface exposée d'au moins 0,5 µm.

7. Procédé selon l'une quelconque des revendications précédentes,
a) l'épaisseur de la première couche de la pièce étant d'au moins 10 um, de préférence d'au moins 50 um, et/ou d'au plus 150 um, de préférence d'au plus 100 um ; et/ou
b) à un point d'impact du faisceau laser avec la première couche de poudre, le faisceau laser ayant un diamètre de faisceau inférieur à 150 um, de préférence inférieur à 30 um ; et/ou
c) au point d'impact du faisceau laser avec la première couche de poudre, la première couche de poudre étant irradiée pendant au moins 20 µs, de préférence au moins 100 µs, et/ou pas plus longtemps que 500 µs, de préférence pas plus longtemps que 300 µs ; et/ou
d) une puissance de sortie d'un laser étant d'au moins 10 W, de préférence d'au moins 40 W, et/ou non supérieure à 300 W, de préférence non supérieure à 120 W.

8. Procédé selon l'une quelconque des revendications précédentes, .
a) une distance ponctuelle étant au moins égale à 10 um, de préférence au moins égale à 30 um, et/ou au plus égale à 150 um, de préférence au plus égale à 80 um ; et/ou .
b) une distance de hachures étant d'au moins 50 um, de préférence d'au moins 100 um, et/ou non supérieure à 300 um, de préférence non supérieure à 150 µm.

9. Procédé selon l'une quelconque des revendications précédentes, l'étape Aii) comprenant l'orientation du faisceau d'énergie focalisé, de préférence le faisceau laser, le long d'une pluralité de trajectoires d'impression,
chaque trajectoire d'impression comprenant une pluralité de points d'impact ; et éventuellement
chaque trajectoire d'impression étant une trajectoire parmi une trajectoire fermée et une trajectoire en forme de spirale,
de préférence, chaque trajectoire d'impression étant de forme sensiblement circulaire.

10. Procédé selon la revendication 9, l'étape Aiii) comprenant l'orientation du faisceau d'énergie focalisé, de préférence du faisceau laser, le long d'une pluralité de trajectoires d'impression, et
au moins une trajectoire d'impression d'une deuxième couche de pièce étant sensiblement perpendiculaire à au moins une des trajectoires d'impression de la première couche de pièce.

11. Procédé selon la revendication 9 ou 10, la première zone comprenant une première et une deuxième extrémité, un premier point d'impact sur la première couche de pièce étant adjacent à la première extrémité, et
pour un deuxième point d'impact sur la première couche de pièce, une distance entre le deuxième point d'impact et la deuxième extrémité étant sensiblement égale ou inférieure à une distance entre le premier point d'impact et la deuxième extrémité, de préférence,
pour tous les points d'impact suivants sur la première couche de pièce, une distance entre les points d'impact et la deuxième extrémité étant sensiblement égale ou diminuant progressivement.

12. Procédé selon la revendication 9, la première couche de pièce comprenant une première section,
la première section comprenant une ou plusieurs trajectoires d'impression, et
la ou les trajectoires d'impression de la première section définissant une première direction d'impression qui est l'une parmi le sens horaire et le sens antihoraire.
